# EUROPÄISCHE PATENTSCHRIFT

(11) **EP 1 095 945 B1**
(45) Veröffentlichungstag und Bekanntmachung des Hinweises auf die Patenterteilung: **20.04.2005**
(21) Anmeldenummer: 00122426.0
(22) Anmeldetag: 13.10.2000
(51) Int. Cl.: C07F 9/09, C07F 9/6574, C09K 21/12

(54) **Verfahren zur Herstellung von Phosphorsäureestern oder Phosphorsäureestergemischen von Polyolen und deren Verwendung**
Process for the preparation of phosphoric acid esters or mixtures of phosphoric acid esters of polyols and their use
Procédé de préparation d'esters d'acide phosphorique ou de mélanges d'esters d'acide phosphorique de polyols et leur utilisation

(30) Priorität: 26.10.1999 DE 19951385
(43) Veröffentlichungstag der Anmeldung: 02.05.2001
(73) Patentinhaber: Chemische Fabrik Budenheim KG, 55257 Budenheim (DE)
(72) Erfinder: Götzmann, Karl, 55257 Budenheim (DE); Nägerl, Hans-Dieter Dr., 67373 Dudenhofen (DE); Sommer, Klaus Dr., 67098 Bad-Dürkheim (DE)
(74) Vertreter: Weber, Dieter, Dr. Dipl.-Chem.

(56) Entgegenhaltungen:
- WO-A-93/05118
- DE-A- 2 645 211
- DE-A- 4 218 891

## Beschreibung

Beispielsweise aus der WO 93/05 118 sind die intumeszierenden Eigenschaften von Zusammensetzungen bekannt, die Phosphorsäureester von Polyolen enthalten. Solche Phosphorsäureester finden in der Industrie vielfältige Anwendung, besonders im Bereich Flammschutz von Kunststoffen. Diese Phosphorsäureester sind halogenfrei und deshalb für den Einsatz als Flammschutzmittel besonders gut geeignet.

Es ist auch bereits bekannt, wie beispielsweise aus Houben Weyl 12/2, Seiten 156 ff. und 226 ff., derartige Phosphorsäureester durch Alkoholyse aus Phosphorpentoxid und/oder Polyphosphorsäure und den gewünschten Polyolen oder deren Mischungen herzustellen. Die direkte Reaktion von Alkoholen mit Phosphorpentoxid bereitet jedoch große Probleme, da Phosphorpentoxid äußerst reaktionsfreudig ist und daher leicht zu Dehydratisierungserscheinungen und damit zur Zersetzung der organischen Komponente unter Verfärbung bis zur Kohlenstoffbildung führt. Um dies zu vermeiden, verwendet die WO 93/05 118 anstelle von Phosphorpentoxid Mischungen von Polyphosphorsäure mit Phosphorpentoxid, wobei jedoch nur maximal 50 % der Phosphormenge als Phosphorpentoxid eingebracht werden können. Eine andere Möglichkeit zur Verminderung der Reaktivität des Phosphorpentoxids beschreibt die DE-A-3 502 705 durch einen bestimmten Temperungsprozeß. Die japanischen Patentveröffentlichungen Nr. 04 210 221, 56 092 294 und 49 055 669 gehen noch einen anderen Weg, indem sie das Reaktionsgemisch mit Tetrahydrofuran, Kohlenwasserstoffen, wie n-Hexan, oder Chloroform verdünnen. Mit überschüssigen Alkoholen arbeiten die US-A-4 153 649, die DE-A-2 941 419 und die DE 3 520 053.

Alle diese Verfahren haben den Nachteil, daß sie anschließend an die Veresterung spezielle Reinigungsoperationen erfordern.

Die der Erfindung zugrundeliegende Aufgabe bestand daher darin, Phosphorsäureester oder -gemische von Polyolen ohne Zersetzungsreaktionen und ohne das Erfordernis anschließender Reinigungsoperationen zu bekommen und in der Form, wie sie dem Reaktionsbehälter entnommen werden, zur Herstellung von Flammschutzausrüstungen benutzen zu können.

Das erfindungsgemäße Verfahren zur Herstellung von Phosphorsäureestem oder Phosphorsäureestergemischen von Polyolen durch Umsetzung der Polyole mit Phosphorpentoxid ist dadurch gekennzeichnet, daß man die für die Veresterung erforderliche Menge an Phosphorpentoxid in einer Menge des herzustellenden Esters oder Estergemisches suspendiert, sodann bei einer Temperatur im Bereich von 20 bis 180 °C die für die Veresterung erforderliche Menge an Polyalkohol und gegebenenfalls an Wasser zugibt, sodann die Veresterungsreaktion im wesentlichen vollständig ablaufen läßt und dann das Produkt gewinnt.

Bei diesem Verfahren kann man mit stöchiometrischen oder im wesentlichen stöchiometrischen Mengen an Phosphorpentoxid, Polyalkohol und gegebenenfalls Wasser arbeiten, so daß praktisch nur der oder die gewünschten Ester entstehen und keine nachträgliche Abtrennung von überschüssigen Ausgangsstoffen oder Lösungsmitteln erfolgen muß.

Die Zugabe von Polyalkohol und gegebenenfalls Wasser erfolgt zweckmäßig bei einer Temperatur im Bereich von 20 bis 150 °C, die anschließende Vervollständigung der Veresterungsreaktion wird zweckmäßig während 1 bis 6 h bei wenigstens der Temperatur der Polyolzugabe durchgeführt. Zweckmäßig wird bei der Vervollständigung der Veresterungsreaktion so lange erhitzt und gerührt, bis eine klare Flüssigkeit entstanden ist, die anzeigt, daß die Umsetzung vollständig erfolgte.

Wenn die Reaktion abgeschlossen ist, wird die neu enstandene Menge an Phosphorsäureester oder Phosphorsäureestergemisch aus dem Reaktionsbehälter entnommen. Darauf kann mit der im Reaktionsbehälter verbliebenen Restmenge an Phosphorsäureester oder -gemisch ein neuer Ansatz der Umsetzung begonnen werden, indem erneut Phosphorpentoxid zugegeben und in dem fertigen Ester oder Estergemisch suspendiert wird.

Insbesondere für die weitere Verwendung zur Herstellung von Flammschutzausrüstungen ist es zweckmäßig, dem Reaktionsgemisch geringe Mengen an Borsäure zuzusetzen. Diese Zusatzmenge an Borsäure liegt vorzugsweise zwischen 0,2 und 6 Gew.%, vorzugsweise bei etwa 3 Gew.%, bezogen auf die Gesamtmenge an zugesetztem Phosphorpentoxid, Polyalkohol und gegebenenfalls Wasser. Der Boranteil in den erfindungsgemäß hergestellten Estern oder Estergemischen verhindert im Brandfall, insbesondere bei Flammschutzausrüstungen für Cellulosematerialien, das Nachglimmen und unterdrückt die Bildung von Rauchgasen.

Die für das erfindungsgemäße Verfahren verwendeten Polyole sind beispielsweise und zweckmäßig 1,2-Ethandiol, 1,2- und 1,3-Propandiol, 1,2-, 1,3-, 1,4- und 2,3-Butandiol, Glycerin, Trimethylolmethan, -ethan und -propan, Neopentylglycol, Erythritole, Pentaerythritol, Di- und Polypentaerythritole, Pentitole, wie Arabitol und Xylitol, Hexitole, wie Mannitol und Sorbitol, Innositole, Dihydroxybenzole und 2,3-Dimethylol-1,3-dihydroxybenzol sowie deren Mischungen.

Als vorteilhaft insbesondere für die Weiterverwendung zur Herstellung von Flammschutzausrüstungen erwiesen sich in manchen Fällen die Kombinationen der erfindungsgemäß hergestellten Phosphorsäureester oder -estergemische mit Polyvinylamin oder Polyethylenimin. Auch Melamin- und Guanidinsalze der Phosphorsäureester erwiesen sich in Kombination mit den erfindungsgemäß hergestellten Phosphorsäureestem als geeignet. Diese Zusatzstoffe sind thermisch stabil und können daher in aufgeschmolzene Kunststoffe eingearbeitet werden. Auch Methylolmelamine sowie deren Vorkondensate können mit den erfindungsgemäß hergestellten Phosphorsäureestern kombiniert und zur Erzeugung flammhemmender Ausrüstungen eingesetzt werden.

Als Bindemittel für die Flammschutzausrüstung sind beispielsweise Phenol-, Melamin- oder Harnstoff-Formaldehydharze, Polyacrylat- oder Polyvinylacetatdispersionen oder Epoxidharze geeignet.

Bevorzugt werden die erfindungsgemäß hergestellten Phosphorsäureester oder -gemische zur Herstellung einer Flammschutzausrüstung schichtartiger Verbundwerkstoffe verwendet.

Schichtartige Verbundwerkstoffe finden in vielen Bereichen Verwendung, wie auf dem Verpakkungssektor, im Haushalts-, Sport-, Technik- und Baubereich, doch auch im Flugzeug-, Auto- und Apparatebau, in der Kühltechnik und bei hochbelasteten Maschinenteilen. Die Vielfalt der möglichen Formen und Anzahl denkbarer Kombinationen von Ausgangsstoffen eröffnen ein breites Spektrum der Einsatzgebiete. Als Bestandteile solcher schichtartiger Verbundwerkstoffe kommen in der Hauptsache Holz, Metalle, Glas sowie anorganische und organische Polymere in Frage. Zu den schichtartigen Verbundsystemen gehören auch Laminate der verschiedensten Art, Schichtpreßstoffe, Wellpappe, Verpackungskrepp, Thermotapeten, Dachisolierungen, Vlieskombinationen der verschiedensten Verfestigungsarten, Sandwichbauteile, kaschierte oder beschichtete Textilien, Kabelummantelungen und anderes mehr.

Die für die Fixierung der erfindungsgemäß hergestellten Phosphorsäureester und -gemische verwendeten Bindemittel können gleichzeitig auch als Bindemittel für die Laminierung verschiedener Werkstoffe verwendet werden. Zur Herstellung von Laminaten können die Trägermaterialien durch Tauchen oder Lackieren imprägniert und beispielsweise bei Temperaturen zwischen 100 und 200°C in Pressen gehärtet werden.

Bei der Verwendung der erfindungsgemäß hergestellten Phosphorsäureester oder -gemische für Flammschutzausrüstungen werden dem Bindemittelsystem zweckmäßig 10 bis 40 % der Phosphorsäureester oder -gemische zugesetzt. Die Zusatzmengen im Bindemittel können durch ein Vorimprägnieren des Trägermaterials vermindert werden. Ein optimaler Flammschutz wird erzielt, wenn sowohl das Trägermaterial als auch die Deckschichten des Verbundwerkstoffes die erfindungsgemäß hergestellten Phosphorsäureester oder deren Gemische enthalten.

Vliese aus anorganischen oder organischen Fasern oder deren Mischungen werden zweckmäßigerweise vor der Verfestigung mit Lösungen der Phosphorsäureester oder Phosphorsäureestergemische bzw. mit Mischungen von Bindemittelharz und Phosphorsäureester besprüht, gelegt und verfestigt.

Die aus den erfindungsgemäß hergestellten Phosphorsäureestem und -gemischen hergestellten Flammschutzausrüstungen ergeben die Vorteile, daß die Entzündbarkeit der Verbundsysteme herabgesetzt wird, die Flammentwicklung gehemmt wird, die Flammenausbreitung beschränkt wird, die vorgegebenen Strukturen, ihre Integrität und Funktion im Brandfall erhalten werden, eine Schutzschicht erzeugt wird, die darunter befindliche Bauteile oder Gegenstände vor Flammeinwirkung schützt, und die Entwicklung brennbarer Gase verhindert wird und im Brandfall keine zusätzlichen Gase aus der Ausrüstung erzeugt werden.

### Beispiel 1

In einem mit Rührer, Thermometer, Rückflußkühler und Tropftrichter ausgestatteten Rundkolben von 1 l Nutzinhalt werden 500 g Ethylenglycoldiphosphorsäuremonoester vorgelegt. Unter Rühren werden darin bei Raumtemperatur 142 g Phosphorpentoxid eingebracht und suspendiert. Anschließend läßt man eine Mischung aus 52 g Ethylenglycol und 18 g Wasser langsam zutropfen, wobei man die Temperatur in dem Reaktor unter 60°C hält. Wenn die vorgesehene Menge der Ethylenglycol/Wasser-Mischung zugegeben ist, steigert man die Temperatur auf 120 bis 130°C und rührt bei dieser Temperatur so lange, bis eine klare Flüssigkeit entstanden ist. Nachdem die Mischung auf Raumtemperatur abgekühlt ist, wird der Massezuwachs in Ethylenglycoldiphosphorsäuremonoester (222 g) entnommen, ehe die nächste Reaktion begonnen wird.

### Beispiel 2

In der gleichen Apparatur, wie in Beispiel 1 beschrieben, werden 500 g Pentaerythrittetraphosphorsäuremonoester vorgelegt. Wegen der Zähflüssigkeit dieses Stoffes wird zuerst unter Rühren auf eine Temperatur von 80 bis 90°C erwärmt. Ist diese Temperatur erreicht, werden 142 g Phosphorpentoxid zugegeben und unter Rühren suspendiert. Anschließend wird eine pastenförmige Mischung aus 68 g Pentaerythrit und 18 g Wasser portionsweise eingetragen. Wenn alles zugegeben ist, wird die Temperatur auf 150°C gesteigert und solange bei dieser Temperatur gerührt, bis eine klare Flüssigkeit entstanden ist. Nach Abkühlen auf etwa 80°C wird die entstandene Menge Pentaerythrittetraphosphorsäuremonoester (228 g) entnommen. Danach kann erneut ein Ansatz gefahren werden.

### Beispiel 3

Eine Anlage bestehend aus einem 350 l fassenden dampfbeheizten Kessel aus Edelstahl, der mit Rührer ausgestattet ist, wird mit 220 kg Phosphorsäureteilmischester gefüllt. Der vorgelegte Mischester wird auf 80 bis 90°C erwärmt, und dann werden 105 kg Phosphorpentoxid zugegeben und in dem vorgelegten Mischester suspendiert. Eine Suspension von 78 kg Pentaerythrit in 47 kg Ethylenglycol wird daraufhin langsam zu der Ester/Phosphorpentoxid-Mischung gegeben. Die Temperatur steigt dabei auf etwa 105 bis 110°C. Nachdem alles zugegeben ist, wird die Temperatur auf 130°C gesteigert. Nach einer Rührzeit von 3 h hat sich eine klare Flüssigkeit gebildet. Die Masse wird jetzt auf etwa 80°C abgekühlt, und es wird der Massenzuwachs von 230 kg Phosphorsäureteilmischester entnommen. Der entnommene Mischester besteht aus primären und sekundären Estern der Orthophosphorsäure. Danach kann erneut eine Veresterung begonnen werden.

### Beispiel 4

Ein aus mehreren Papierlagen und zwei Deckbögen aus Glasfasergewebe bestehendes Trägermaterial wird mit einer 1 : 1-Mischung aus einer 30%igen Melaminharzlösung und einer 70%igen Phosphorsäureesterlösung, hergestellt aus Phosphorpentoxid, Glycol und Pentaerythrit gemäß Beispiel 3 getränkt und über eine Quetschwalze so abgepreßt, daß eine Ausrüstungsauflage von rund 130 % vorhanden ist. Das Material wird im Umlufttrockenschrank bei 40°C getrocknet. Anschließend härtet man in einer Heizpresse bei 140°C und 40 bis 60 bar. Der so erhaltene Schichtpreßstoff erfüllte im Brenntest nach UL94 die VO-Bedingungen.

### Beispiel 5

Eine Wabenplatte aus Nomexpapier wird in eine Mischung aus einer 25 %igen Lösung eines Melaminharzes mit einer 75%igen Phosphorsäureesterlösung (Mischungsverhältnis 5 : 2) getaucht, von überschüssiger Harzlösung abgeschleudert, so daß eine Ausrüstungsauflage von rund 100% zurückbleibt. Dann wird getrocknet und 30 min bei 100 bis 120°C gehärtet. Die Muster erfüllen die Forderungen des OSU-Tests hinsichtlich der Wärmeentwicklung und die Bedingungen des Mil-STD 401 B-Tests.

### Beispiel 6

Ein 5 bis 10 mm dickes lockeres Mischvlies aus Cellulose und Acrylnitrilfasem wird mit einer 1 : 1-Mischung aus einer Harnstofflösung und einer Phosphorsäureesterlösung (jeweils 40%ig), hergestellt aus Phosphorpentoxid, Neopentylglycol und Pentaerythrit im Mischungsverhältnis 1 : 2,0 : 0,75, so besprüht, daß eine Aufnahme von rund 80 % erfolgt. Das Vliesmaterial wird fünffach übereinandergelegt und in einer Heizpresse bei 145 °C und 5 bar 20 min gehärtet.

### Beispiel 7

Eine 30 mm starke PMI-Schaumplatte wird mit einer Mischung aus einer jeweils 25%igen Lösung eines Melaminvorkondensates und eines Phosphorsäureesters aus Phosphorpentoxid, Pentaerythrit und Trimethylolpropan mit einem Gehalt von 2% Borsäure getränkt, wobei nach Abtropfen die Flottenaufnahme 135% beträgt. Die getrocknete Schaumplatte wird auf beiden Seiten mit einem Laminat aus Beispiel 4 abgedeckt und in einer Heizplatte bei 160°C gehärtet. Sie erfüllt die Bedingungen des Kantenbeflammungstests.

## Patentansprüche

1. Verfahren zur Herstellung von Phosphorsäureestem oder Phosphorsäureestergemischen von Polyolen durch Umsetzung der Polyole mit Phosphorpentoxid, **dadurch gekennzeichnet, daß** man die für die Veresterung erforderliche Menge an Phosphorpentoxid in einer Menge des herzustellenden Esters oder Estergemisches suspendiert, sodann bei einer Temperatur im Bereich von 20 bis 180°C die für die Veresterung erforderliche Menge an Polyol und gegebenenfalls Wasser zugibt, sodann die Veresterungsreaktion im wesentlichen vollständig ablaufen läßt und danach das Produkt gewinnt.

2. Verfahren nach Anspruch 1, **dadurch gekennzeichnet, daß** man im wesentlichen stöchiometrische Mengen an Phosphorpentoxid, Polyol und gegebenenfalls Wasser zugibt.

3. Verfahren nach Anspruch 1 oder 2, **dadurch gekennzeichnet, daß** man Polyol und gegebenenfalls Wasser bei einer Temperatur im Bereich von 20 bis 150°C zugibt.

4. Verfahren nach einem der Ansprüche 1 bis 3, **dadurch gekennzeichnet, daß** man die Veresterungsreaktion bei wenigstens der Temperatur der Zugabe von Polyol und gegebenenfalls Wasser während einer Zeitdauer von 1 bis 6 h vervollständigt.

5. Verfahren nach einem der Ansprüche 1 bis 4, **dadurch gekennzeichnet, daß** man zusätzlich eine Menge von 0,2 bis 6 Gew.%, vorzugsweise etwa 3 Gew.%, bezogen auf die zugesetzte Gesamtmenge von Phosphorpentoxid, Polyol und gegebenenfalls Wasser, Borsäure zumischt.

6. Verfahren nach einem der Ansprüche 1 bis 5, **dadurch gekennzeichnet, daß** man als Polyole 1,2-Ethandiol, 1,2- oder 1,3-Propandiol, 1,2-, 1,3-, 1,4- oder 2,3-Butandiol, Glycerin, Trimethylolmethan, -ethan oder -propan, Neopentylglycol, Erythritole, Pentaerythritol, Di- oder Polypentaeryhtritole, Pentitole, wie Arabitol und Xylitol, Hexitole, wie Mannitol oder Sorbitol, Innositole, Dehydroxybenzole, 2,3-Dimethylol-1,3-dihydroxybenzol oder deren Mischungen verwendet.

7. Verwendung eines nach einem der Ansprüche 1 bis 6 hergestellten Phosphorsäureesters oder Phosphorsäureestergemisches zur Herstellung einer Flammschutzausrüstung, insbesondere von schichtartigen Verbundwerkstoffen, unter Fixierung mit einem Bindemittel.

8. Verwendung der Phosphorsäureester oder Phosphorsäureestergemische nach Anspruch 7 in Kombination mit Polyvinylamin, Polyethylenimin, Melamin- oder Guanidinsalz der Phosphorsäureester, Methylolmelamin und deren Vorkondensaten sowie deren Gemischen.

9. Verwendung von Phosphorsäureestern oder Phosphorsäureestergemischen nach Anspruch 7 oder 8 mit Phenol-, Melamin- oder Harnstofformaldehydharz, Polyacrylat- oder Polyvinylacetatdispersion oder Epoxidharz als Bindemittel.

## Claims

1. A process for the production of phosphoric acid esters or phosphoric acid ester mixtures of polyhydric alcohols by reaction of the polyhydric alcohols with phosphorus pentoxide, **characterised in that** the amount of phosphorus pentoxide which is required for the esterification operation is suspended in an amount of the ester or ester mixture to be produced, thereupon the amount of polyhydric alcohol required for the esterification operation and possibly water is added at a temperature in the range of between 20 and 180°C, thereupon the esterification reaction is substantially completely executed and thereafter the product is obtained.

2. A process according to claim 1 **characterised in that** substantially stoichiometric amounts of phosphorus pentoxide, polyhydric alcohol and optionally water are added.

3. A process according to claim 1 or claim 2 **characterised in that** polyhydric alcohol and optionally water are added at a temperature in the range of between 20 and 150°C.

4. A process according to one of claims 1 to 3 **characterised in that** the esterification reaction is completed at at least the temperature of the addition of polyhydric alcohol and optionally water during a period of between 1 and 6 hours.

5. A process according to one of claims 1 to 4 **characterised in that** an amount of between 0.2 and 6 % by weight, preferably about 3 % by weight, with respect to the added total amount of phosphorus pentoxide, polyhydric alcohol and optionally water, of boric acid is additionally added.

6. A process according to one of claims 1 to 5 **characterised in that** the polyhydric alcohols used are ethane-1,2-diol, propane-1,2- and 1,3-diol, butane-1,2-, -1,3-, -1,4- and -2,3-diol, glycerine, trimethylolmethane, -ethane and -propane, neopentylglycol, erythritols, pentaerythritol, di- and polypentaerythritols, pentitols such as arabitol and xylitol, hexitols such as mannitol and sorbitol, innositols, dihydroxybenzols and 2,3-dimethylol-1,3-dihydroxybenzol or mixtures thereof.

7. Use of a phosphoric acid ester or phosphoric acid ester mixture produced according to one of claims 1 to 6 for the production of a flame-proofing treatment, in particular laminate composite materials, with fixing with a binding agent.

8. Use of the phosphoric acid esters or phosphoric acid ester mixtures according to claim 7 in combination with polyvinyl amine, polyethylene imine, melamine or guanidine salt of the phosphoric acid esters, methylol melamine and pre-condensates thereof and mixtures thereof.

9. Use of phosphoric acid esters or phosphoric acid ester mixtures according to claim 7 or claim 8 with phenol, melamine or urea formaldehyde resin, polyacrylate or polyvinyl acetate dispersion or epoxy resin as binding agent.

## Revendications

1. Procédé de préparation d'esters d'acide phosphorique ou de mélanges d'esters d'acide phosphorique et de polyols par réaction des polyols avec du pentoxyde de phosphore, **caractérisé en ce qu'**on met en suspension dans une certaine quantité de l'ester ou du mélange d'esters devant être préparé la quantité de pentoxyde de phosphore nécessaire à l'estérification, puis, à une température comprise dans la plage de 20 à 180°C, on ajoute la quantité de polyol et éventuellement d'eau nécessaire à l'estérification, puis on laisse la réaction d'estérification se dérouler pour ainsi dire complètement, puis on récupère le produit.

2. Procédé selon la revendication 1, **caractérisé en ce qu'**on ajoute des quantités pour ainsi dire stoechiométriques de pentoxyde de phosphore, de polyol et éventuellement d'eau.

3. Procédé selon la revendication 1 ou 2, **caractérisé en ce qu'**on ajoute le polyol et éventuellement l'eau à une température comprise dans la plage de 20 à 150°C.

4. Procédé selon l'une des revendications 1 à 3, **caractérisé en ce qu'**on parachève la réaction d'estérification au moins à la température d'addition du polyol et éventuellement de l'eau, pendant un laps de temps de 1 à 6 heures.

5. Procédé selon l'une des revendications 1 à 4, **caractérisé en ce qu'**on ajoute encore, par mélange, une quantité de 0,2 à 6 % en poids et de préférence d'environ 3 % en poids d'acide borique, par rapport à la quantité totale ajoutée de pentoxyde de phosphore, de polyol et éventuellement d'eau.

6. Procédé selon l'une des revendications 1 à 5, **caractérisé en ce qu'**on utilise en tant que polyols le 1,2-éthanediol, le 1,2- ou le 1,3-propanediol, le 1,2-, le 1,3-, le 1,4- ou le 2,3-butanediol, le glycérol, le triméthylolméthane, -éthane ou -propane, le néopentylglycol, les érythritols, le pentaérythritol, les di- ou polypentaérythritols, les pentitols tels que l'arabitol et le xylitol, les hexitols tels que le mannitol ou le sorbitol, les inositols, les déhydroxybenzènes, le 2,3-diméthylol-1,3-dihydroxybenzène ou leurs mélanges.

7. Utilisation d'un ester d'acide phosphorique ou d'un mélange d'esters d'acide phosphorique préparés selon l'une des revendications 1 à 6 pour préparer un additif d'ignifugation, en particulier de matériaux composites lamellaires, avec fixation par un liant.

8. Utilisation des esters d'acide phosphorique ou des mélanges d'esters d'acide phosphorique selon la revendication 7 en combinaison avec une polyvinylamine, une polyéthylène-imine, un sel de mélamine ou de guanidine des esters de l'acide phosphorique, la méthylolmélamine, ou leurs produits de précondensation, ainsi que leurs mélanges.

9. Utilisation, en tant que liant, d'esters d'acide phosphorique ou de mélanges d'esters d'acide phosphorique selon la revendication 7 ou 8 avec une résine de phénol-, mélamine- ou urée-formaldéhyde, une dispersion de polyacrylate ou de poly(acétate de vinyle), ou une résine époxydique.
